# EUROPÄISCHE PATENTSCHRIFT

(11) **EP 3 992 522 B1**
(45) Veröffentlichungstag und Bekanntmachung des Hinweises auf die Patenterteilung: **23.11.2022**
(21) Anmeldenummer: 21204894.6
(22) Anmeldetag: 27.10.2021
(51) Int. Cl.: F21V 21/35, F21Y 115/10, H02G 3/08, H01R 13/52, H01R 25/16

(54) **ELEKTRISCHES MODUL ZUM ANSCHLUSS AN EINE TRAGSCHIENE**
ELECTRICAL MODULE FOR CONNECTION TO A SUPPORT RAIL
MODULE ÉLECTRIQUE DESTINÉ À LA CONNEXION À UN RAIL DE SUPPORT

(30) Priorität: 28.10.2020 DE 102020128275
(43) Veröffentlichungstag der Anmeldung: 04.05.2022
(73) Patentinhaber: Zumtobel Lighting GmbH, 6850 Dornbirn (AT)
(72) Erfinder: Feurle, Helmut, 6850 Dornbirn (AT); Kohler, Christian, 6850 Dornbirn (AT); Krampl, Yannick, 6850 Dornbirn (AT); Müller, Jeremias, 6850 Dornbirn (AT)
(74) Vertreter: Thun, Clemens

(56) Entgegenhaltungen:
- EP-A1- 3 109 544
- EP-A2- 2 375 128
- DE-U1-202012 100 629
- DE-U1-202014 104 800

## Beschreibung

Die vorliegende Erfindung betrifft ein elektrisches Modul, welches insbesondere als Leuchte und/oder als Kamera und/oder als Sensoreinheit ausgebildet ist, und mit einer Tragschiene gekoppelt werden kann, wobei die Tragschiene ein Tragschienenprofil mit zwei Seitenwänden sowie mindestens eine in dem Tragschienenprofil angeordnete Stromschiene mit kontaktierbaren Leitungen aufweist.

Tragschienen mit einem Tragschienenprofil sowie einer in dem Tragschienenprofil gehaltenen Stromschiene sind aus dem Stand der Technik bekannt und werden beispielsweise zum Realisieren länglicher sog. Lichtbandsysteme genutzt. Ein bekanntes Lichtbandsystem wird von der Anmelderin unter der Bezeichnung "TECTON" vertrieben und zeichnet sich dadurch aus, dass Leuchten oder andere elektrische Verbraucher flexibel über die gesamte Länge des Systems hinweg an der Tragschiene positioniert werden können. Ermöglicht wird dies dadurch, dass aufgrund einer speziellen Lagerung der Leitungen der Stromschiene diese über die im Wesentlichen gesamte Länge des Lichtbandsystems hinweg für die Verbraucher zugänglich sind, sodass ein Kontaktieren der Leitungen nicht nur an fest vorgegebenen Positionen, sondern an beliebiger Stelle erfolgen kann. Beispielsweise zeigt die WO 2001/091250 A1 ein derartiges Lichtbandsystem.

Bei dem oben angesprochenen System "TECTON" sind zwei Stromschienen einander gegenüberliegend an den beiden Seitenwänden eines nach unten offenen, U-förmigen Tragschienenprofils angeordnet. Das Kontaktieren der Leitungen der Stromschienen erfolgt dann dadurch, dass die Leuchte oder der Verbraucher ein drehbares Kontaktierungselement aufweist, welches von der Unterseite her in die Tragschiene eingeführt und anschließend um etwa 45° verdreht wird. An dem Kontaktierungselement angeordnete Kontakte sind hierbei derart ausgeführt, dass sie durch das Verdrehen seitlich ausgeschwenkt werden und letztendlich im verdrehten Zustand die Leitungen der Stromschienen kontaktieren. Mit dem Kontaktierungselement ist weiterhin ein Trägerelement gekoppelt, an welchem wiederum die Leuchtmittel angebracht sind.

Eine bspw. in der EP 3 006 819 B1 beschriebene Lösung, sieht hierbei vor, dass das drehbare Kontaktierungselement mit einem Hebel ausgeführt ist, der seitlich durch einen Schlitz des Trägerelements der Leuchte nach außen hervorragt.

Mit den bisher bekannten Realisierungen eines derartigen Tragschienensystems mit einem nach außen geführten Hebel zur Bedienung eines Kontaktierungselements konnte allerdings das Trägerelement der Leuchte oder des Verbrauchers nach außen hin nicht zuverlässig abgedichtet werden, wobei der bisherige nach außen geführte Hebel weiterhin anfällig für ein unbeabsichtigtes Verstellen war.

Der vorliegenden Erfindung liegt deshalb die Aufgabenstellung zugrunde, ein verbessertes Verstellsystem für das Kontaktierungselement des elektrischen Moduls anzugeben.

Diese Aufgabe wird durch ein elektrisches Modul mit den Merkmalen des unabhängigen Anspruchs 1 gelöst. Vorteilhafte Weiterbildungen und besondere Ausführungsarten der Erfindung sind in den abhängigen Ansprüchen angegeben.

Gemäß der Erfindung ist ein elektrisches Modul zum Anschließen an eine Tragschiene, welche ein Tragschienenprofil mit zwei Seitenwänden sowie mindestens eine Stromschiene aufweist, welche an einer der beiden Innenseiten der Seitenwände des Tragschienenprofils angeordnet ist und elektrisch kontaktierbare Leitungen aufweist, vorgesehen. Hierbei weist das elektrische Modul ein Kontaktierungselement auf, welches in das Tragschienenprofil einführbar ist und Anschlusskontakte aufweist, die dazu vorgesehen sind, in einem in das Tragschienenprofil eingesetzten Zustand des Kontaktierungselements in Anlage gegen Leitungen der Stromschiene zu gelangen. Das Kontaktierungselement ist hierbei gegenüber einem Trägerelement des elektrischen Moduls zwischen einer Offenposition, in welcher ein Einführen und Entnehmen des Kontaktierungselements aus dem Tragschienenprofil ermöglicht ist, und einer Kontaktierungsposition, in welcher die Anschlusskontakte Leitungen der Stromschiene kontaktieren, um eine Drehachse drehbar gelagert. Erfindungsgemäß ist zudem vorgesehen, dass das Trägerelement zwei parallel zueinander verlaufende Seitenwände aufweist, wobei das Kontaktierungselement zwischen den beiden parallel zueinander verlaufenden Seitenwänden angeordnet ist, und wobei das Kontaktierungselement mit einem Betätigungsarm gekoppelt ist, welcher dazu ausgebildet ist bei Betätigung das Kontaktierungselement von der Offenposition in die Kontaktierungsposition zu bewegen und vice versa. Weiterhin ist der Betätigungsarm durch eine Ausnehmung in einer der beiden parallel zueinander verlaufenden Seitenwände geführt, derart dass der Betätigungsarm von einer Außenseite des elektrischen Moduls betätigt werden kann. Hierbei weist der Betätigungsarm eine Dichtung auf, welche dazu ausgebildet ist, die Ausnehmung in der Kontaktierungsposition des Kontaktierungselements abzudichten.

Somit ist ein elektrisches Modul zum Anschluss an eine Tragschiene beschrieben, welches durch Verdrehen des Kontaktierungselements des elektrischen Moduls mit der Tragschiene gekoppelt werden kann. Hierbei ist der Verstellvorgang durch einen nach außen geführten Betätigungsarm komfortabel und einfach von außen für einen Benutzer zu bedienen, wobei zudem im installierten Zustand, also in der Kontaktierungsposition, die Ausnehmung in einer Seitenwand des elektrischen Moduls abgedichtet ist. Dadurch ist ein elektrisches Modul geschaffen, welches auch an feuchten, nassen und/oder staubigen Orten platziert und verwendet werden kann. Das derartige elektrische Modul ist somit wie auch bislang einfach durch Bedienung des Betätigungsarms installierbar, wobei weiterhin allerdings nicht nur eine elektrische und mechanische Kopplung mit der Tragschiene durch die Betätigung des Betätigungsarms erreicht wird, sondern zudem das Trägerelement des elektrischen Moduls an der Ausnehmung abgedichtet ist. Somit ist ein Verstellsystem, bzw. ein Verstellmechanismus angegeben, welcher mehrere Anwendungsschritte in ein simples Bedienen des Betätigungsarms zusammenfasst.

In einer bevorzugten Ausführungsform dichtet die Dichtung in der Offenposition nicht die Ausnehmung ab.

Mit einer derartigen Ausführung wird bewerkstelligt, dass der Installationsvorgang, also der Übergang des Kontaktierungselements von der Offenposition in die Kontaktierungsposition, einfach durchführbar ist, wobei möglichst wenig Reibungswiderstand durch die Dichtung entsteht. Somit ist eine Ausführungsform geschaffen, in welcher die Dichtung vorzugsweise fest mit dem Betätigungsarm verbunden ist, sodass die Ausnehmung lediglich in der Kontaktierungsposition vollständig abgedichtet ist. Hierbei lässt sich ein besonders hoher Grad an Dichtigkeit realisieren. Die Dichtung selbst wirkt somit in der Kontaktierungsposition einem versehentlichen Verstellen des Betätigungsarms entgegen. Insbesondere kann vorgesehen sein, dass die Dichtung die Ausnehmung zumindest teilweise umschließt.

Gemäß einer weiteren Ausführung weist die Dichtung zumindest ein Dichtungselement auf, wobei das Dichtungselement bevorzugt eine Dichtungslamelle ist.

Eine derartige Ausgestaltung der Dichtung lässt diese die Ausnehmung effektiver vor äußeren Einflüssen wie Staub, Feuchtigkeit und Flüssigkeiten schützen, wobei das zumindest eine Dichtungselement, insbesondere die zumindest eine Dichtungslamelle, die äußeren Einflüsse abschirmt. Besonders bevorzugt weist die Dichtung mehrere Dichtungslamellen auf, wobei jede einzelne Dichtungslamelle mit der Seitenwand, respektive mit den Wänden der Ausnehmung zusammenwirkt, um so das Trägerelement von außen abdichten. Mit zunehmender Anzahl an Lamellen wird hierbei eine Art Labyrinth geschaffen, welches die äußeren Einflussfaktoren abschwächt, sodass die Ausnehmung des Trägerelements stärker abgedichtet ist.

In einer besonders vorteilhaften Ausführung ist das Kontaktierungselement mit einem Drehelement gekoppelt, wobei das Drehelement bevorzugt über ein Gelenk mit dem Betätigungsarm verbunden ist, derart, dass der Betätigungsarm in einer geradlinigen Bewegung bewegbar ist.

Hierdurch wird eine besonders einfache und leichtgängige Bedienung des Betätigungsarms ermöglicht, wobei zudem ein versehentliches Verstellen des Betätigungsarms verhindert wird. Der Betätigungsarm kann somit besonders intuitiv durch einen Benutzer bedient werden. Weiterhin wirkt sich eine derartige Ausführung besonders vorteilhaft auf den Verstellvorgang aus, wobei die Dichtung geradlinig in die Ausnehmung eingeführt wird, sodass die Dichtung möglichst dichtend an der Ausnehmung anliegt. Der Betätigungsarm kann dadurch weiterhin besonders platzsparend und stabil gefertigt sein, da beim Betätigen des Betätigungsarms stets aus derselben Richtung eine Kraft wirkt. Die Bewegung des Betätigungsarms ist hierbei bevorzugt derart, dass der Betätigungsarm senkrecht zu einer Längsrichtung des Trägerelements bewegt wird, sodass der Verstellvorgang des Kontaktierungselements durch Hineindrücken bzw. durch Herausziehen des Betätigungsarms erfolgt.

Weiterhin bevorzugt ist das Gelenk derart ausgebildet, dass eine geradlinige Bewegung des Betätigungsarms in einer Drehbewegung des Drehelements, und des damit gekoppelten Kontaktierungselements, resultiert.

Mit dieser Ausgestaltung wird bewerkstelligt, dass die erzeugte Drehbewegung nur indirekt durch den Benutzer beeinflusst wird, wobei dies besonders vorteilhaft für die Zuverlässigkeit des Verstellmechanismus ist. Der Bedienung durch den Benutzer ist zudem vereinfacht.

In einer weiteren Ausführung weist das Drehelement ein Rastelement auf, wobei besonders bevorzugt das Rastelement an einem Vorsprungbereich des Drehelements angeordnet ist.

Eine derartige Ausgestaltung ist besonders vorteilhaft hinsichtlich der Funktionssicherheit des elektrischen Moduls, da mittels des Rastelements eine bestimmte Stellung des Drehelements, und somit auch des Kontaktierungselements, eingerastet werden kann. Besonders bevorzugt kann mit einem solchen Rastelement die Offenposition und/oder die Kontaktierungsposition fixiert werden, sodass die Kopplung des elektrischen Moduls mit der Tragschiene besonders sicher und einfach ist.

Besonders bevorzugt resultiert eine geradlinige Bewegung des Betätigungsarms in einer kreisbahnförmigen Bewegung des Rastelements.

Hierbei wird das Verstellen und Verrasten des Drehelements durch das Rastelement weiter vereinfacht, wobei insbesondere der Benutzer mit geringem Kraftaufwand durch simple lineare Bewegung des Betätigungsarms das Rastelement bewegen kann.

Gemäß einer weiter bevorzugten Ausführungsform ist das Rastelement derart ausgebildet, dass es in der Kontaktierungsposition durch die Kopplung des Drehelements mit dem Betätigungsarm die Dichtung in die Ausnehmung drückt.

Hierdurch wird bewerkstelligt, dass in der Kontaktierungsposition durch das Rastelement Kraft auf die Dichtung ausgeübt wird, wobei durch diese Kraft die Dichtung stärker an die Außenwände der Ausnehmung gedrückt wird, sodass effizienter abgedichtet wird.

Vorzugsweise ist das Rastelement mit Bezug auf die Drehachse dem Betätigungsarm gegenüberliegend angeordnet.

Somit ist der Verstellmechanismus, besonders kompakt und effizient im Innenraum des Trägerelements anordbar, wobei weiterhin die Bedienung des Betätigungsarms für einen Benutzer erleichtert ist, da im Zusammenspiel mit dem Gelenk ein verringerter Kraftaufwand zum Verstellen des Drehelements und somit des Rastelements benötigt ist.

Weiterhin bevorzugt weist das Trägerelement ein Widerstandselement auf, welches dazu ausgebildet ist, das Kontaktierungselement in der Kontaktierungsposition zu arretieren, wobei das Widerstandselement insbesondere integral mit dem Trägerelement ausgebildet sein kann oder ein Federelement oder eine Gumminoppe sein kann.

Es kann also vorgesehen sein, dass das Widerstandselement durch Verformung des Trägerelements gebildet ist. Durch das Widerstandselement wird die Betriebs- und Bedienungssicherheit des elektrischen Moduls verbessert, da die Kontaktierungsposition nicht ohne weiteres, also ohne Krafteinwirkung, zurück in die Offenposition gelangen kann.

In einer besonders vorteilhaften Ausführung ist das Rastelement dazu ausgebildet, mit dem Widerstandselement zu interagieren, wobei das Rastelement vorzugsweise eine Fixierbewegung des Kontaktierungselements von der Offenposition in die Kontaktierungsposition bis zum Erreichen eines Scheitelpunkts des Widerstandselement die Fixierbewegung hemmt, und wobei ab Erreichen des Scheitelpunkts des Widerstandselements das Rastelement die Fixierbewegung unterstützt, wobei bevorzugt das Rastelement eine Lösebewegung des Kontaktierungselements von der Kontaktierungsposition in die Offenposition bis zum Erreichen eines Scheitelpunkts des Widerstandselements die Lösebewegung hemmt, und wobei ab Erreichen des Scheitelpunkts des Widerstandselements das Rastelement die Lösebewegung unterstützt.

Somit wird die Bedienbarkeit des elektrischen Moduls, und insbesondere die Bedienbarkeit des Verstellmechanismus, erheblich vereinfacht und zusätzlich gesichert. Weiterhin wird mit dem anfänglichen Hemmen der Lösebewegung erreicht, dass die Dichtung nicht ohne signifikanten Kraftaufwand von der Ausnehmung gelöst wird, sodass die Dichtung des Trägerelements nach außen hin weiter geschützt ist. Zudem wird durch diese Ausführungsform die ordnungsgemäße Installation des elektrischen Moduls, und insbesondere die Fixierbewegung, unterstützt.

Weiterhin bevorzugt erfüllt die durch die Dichtung abgedichtete Ausnehmung in der Kontaktierungsposition die Schutzklasse IP54, besonders bevorzugt die Schutzklasse IP64.

Durch Erfüllung dieser Schutzklasse ist das elektrische Modul besonders dafür geeignet, sowohl innerhalb wie auch außerhalb verwendet zu werden. Insbesondere ist gewährleistet, dass das an das Gesamtsystem angeschlossene Modul die Abdichtung des Systems nicht beeinträchtigt, so dass das Tragschienensystem insgesamt die Anforderungen der Schutzklasse IP54 oder sogar IP64 erfüllen kann.

In einer bevorzugten Ausführung ist das elektrische Modul eine Leuchte ist, wobei bevorzugt das Trägerelement zumindest ein Leuchtmittel, besonders bevorzugt eine LED, aufweist, und wobei insbesondere die Leuchte eine lichtdurchlässige Abdeckung und/oder ein optisches Element aufweist.

Aufgrund der in der Kontaktierungsposition abgedichteten Ausnehmung kann die Leuchte beispielsweise auch als Feuchtraumleuchte verwendet werden, wobei auch Outdoor-Anwendungen denkbar sind. Weiterhin ist es denkbar neben einer Leuchte zur Nutzbeleuchtung auch Leuchten zur Akzentbeleuchtung, oder Notbeleuchtung einzusetzen. Zudem kann vorgesehen sein, dass die Leuchte eine Rettungs- oder Sicherheitsleuchte, wie beispielsweise eine EXIT-Leuchte zur Notausgangsweisung, ist. Mit einem als Leuchte ausgeführten elektrischen Modul, lässt sich das Trägerelement zusammen mit der Tragschiene in einfacher und schneller Weise als eine Lampe, insbesondere in eine Decken- und/oder Wandlampe, verwenden.

Gemäß einer weiteren Ausführungsform ist das elektrische Modul eine Sensoreinheit, wobei die Sensoreinheit insbesondere Helligkeitssensoren oder andere Sensoren umfasst.

Das so beschaffene elektrische Modul kann hierbei durch die Dichtung in Indoor- und Outdoor-Anwendungen als Sensoreinheit dienen, wobei das elektrische Modul beispielsweise Bewegungssensoren, Helligkeitssensoren, Temperatursensoren und/oder andere Sensoren aufweisen kann. Weiterhin kann eine weitere Ausführungsform vorgesehen sein, wobei das elektrische Modul eine Kameraeinheit ist, und wobei die Kameraeinheit insbesondere eine Kamera zur Raumüberwachung oder eine Wärmebildkamera aufweist.

Somit kann mit dem so beschaffenen elektrischen Modul eine Kameraeinheit sowohl innerhalb geschlossener Räume wie auch außerhalb installiert und verwendet werden, wobei das so beschaffene elektrische Modul auch in ein Überwachungssystem eingebunden werden kann. Insbesondere ist es denkbar, dass das elektrische Modul eine herkömmliche Kamera, und/oder Nachtbildkamera, bzw. eine Infrarotkamera, und/oder eine Wärmebildkamera umfasst.

Weiterhin kann vorgesehen sein, ein einzelnes elektrisches Modul mit Leuchten, Kameras und/oder Sensoren auszustatten.

Somit ist ein elektrisches Modul beschrieben, welches besonders flexibel einsetzbar ist, wobei durch die Dichtung die Ausnehmung des Trägerelements im montierten Zustand stets abgedichtet ist. Insbesondere ermöglicht das Kontaktierungselement, dass unabhängig von der Anwendung des elektrischen Moduls die elektrischen Anschlüsse des elektrischen Moduls mit den Leitungen der Tragschiene gekoppelt werden, sodass neben einer reinen Stromversorgung auch eine Datenkommunikation über diese Leitungen denkbar ist. Weiterhin ist unabhängig von der gewählten Ausführung des elektrischen Moduls mit dem Betätigungsarm eine besonders einfache und sichere Montage bzw. Installation des elektrischen Moduls geschaffen. Hierbei wird durch einfaches Betätigen des Betätigungsarms das Kontaktierungselement von der Offenposition in die Kontaktierungsposition bewegt, wobei sowohl eine elektrische Kopplung als auch eine mechanische Kopplung des elektrischen Moduls mit der Tragschiene erzielt wird. In einer bevorzugten Ausführungsform weist das elektrische Modul weiterhin Mechanismen zur Vermeidung eines unabsichtlichen Verstellens des Betätigungsarms auf, wobei zudem die Dichtigkeit des Trägerelements verbessert ist.

In einer besonders bevorzugten Ausführungsform ist ein Tragschienensystem vorgesehen, wobei das Tragschienensystem zumindest eine Tragschiene, welche ein Tragschienenprofil mit zwei Seitenwänden sowie mindestens eine Stromschiene aufweist, welche an einer der beiden Innenseiten der Seitenwände des Tragschienenprofils angeordnet ist und elektrisch kontaktierbare Leitungen aufweist; sowie zumindest ein elektrisches Modul gemäß einer der zuvor dargelegten Ausführungsformen, umfasst, wobei das zumindest eine elektrische Modul mit der zumindest einen Tragschiene gekoppelt ist.

Es ist also ein besonders flexibel einsetzbares Tragschienensystem beschrieben, welches in einfacher und schneller Weise an individuelle Anforderungen angepasst werden kann. Weiterhin ist bevorzugt vorgesehen, dass in einem Tragschienensystem mehrere Tragschienen vorhanden sind, welche miteinander gekoppelt sind. In einer bevorzugten Ausführungsform können an einer Tragschiene mehrere elektrische Module installiert werden.

Somit ist ein elektrisches Modul beschrieben, welches besonders flexibel einsetzbar, leicht, sicher und intuitiv montierbar, und gegen äußere Einflüsse, wie beispielsweise Staub, Feuchtigkeit und Nässe durch eine Dichtung abgedichtet ist. Weiterhin ist ein Tragschienensystem mit zumindest einem elektrischen Modul und zumindest einer Tragschiene angegeben.

Die Erfindung wird im Folgenden anhand von Ausführungsbeispielen und mit Bezug auf die Zeichnung näher erläutert. Es zeigen:
- Figur 1A: eine Seitenansicht einer beispielhaften Ausführungsform eines erfindungsgemäßen elektrischen Moduls in Kontaktierungsposition;
- Figur 1B: eine weitere Seitenansicht einer beispielhaften Ausführungsform eines erfindungsgemäßen elektrischen Moduls in Kontaktierungsposition;
- Figur 1C: eine Seitenansicht einer beispielhaften Ausführungsform eines erfindungsgemäßen elektrischen Moduls in Offenposition;
- Figur 2: eine seitliche Explosionsdarstellung einer beispielhaften Ausführungsform eines erfindungsgemäßen elektrischen Moduls in Kontaktierungsposition;
- Figur 3A: eine Seitenansicht einer beispielhaften Ausfiihrungsform eines erfindungsgemäßen elektrischen Moduls ohne Darstellung des Kontaktierungselements in Offenposition;
- Figur 3B: eine Seitenansicht einer beispielhaften Ausführungsform eines erfindungsgemäßen elektrischen Moduls ohne Darstellung des Kontaktierungselements in Kontaktierungsposition;
- Figur 4A: eine Draufsicht auf eine beispielhaften Ausfiihrungsform eines erfindungsgemäßen elektrischen Moduls ohne Darstellung des Kontaktierungselements in Offenposition;
- Figur 4B: eine Draufsicht auf eine beispielhaften Ausführungsform eines erfindungsgemäßen elektrischen Moduls ohne Darstellung des Kontaktierungselements in Kontaktierungsposition;
- Figur 5A: eine Draufsicht auf eine beispielhaften Ausführungsform eines erfindungsgemäßen elektrischen Moduls in Offenposition;
- Figur 5B: eine Draufsicht auf eine beispielhaften Ausführungsform eines erfindungsgemäßen elektrischen Moduls in Kontaktierungsposition;
- Figur 6: eine Seitenansicht einer weiteren beispielhaften Ausführungsform eines erfindungsgemäßen elektrischen Moduls ohne Darstellung des Kontaktierungselements in Kontaktierungsposition;
- Figur 7: eine Skizze eines Querschnitts normal zu der Längsachse des Trägerelements einer Ausführungsform eines elektrischen Moduls, wobei das elektrische Modul eine Leuchte ist.

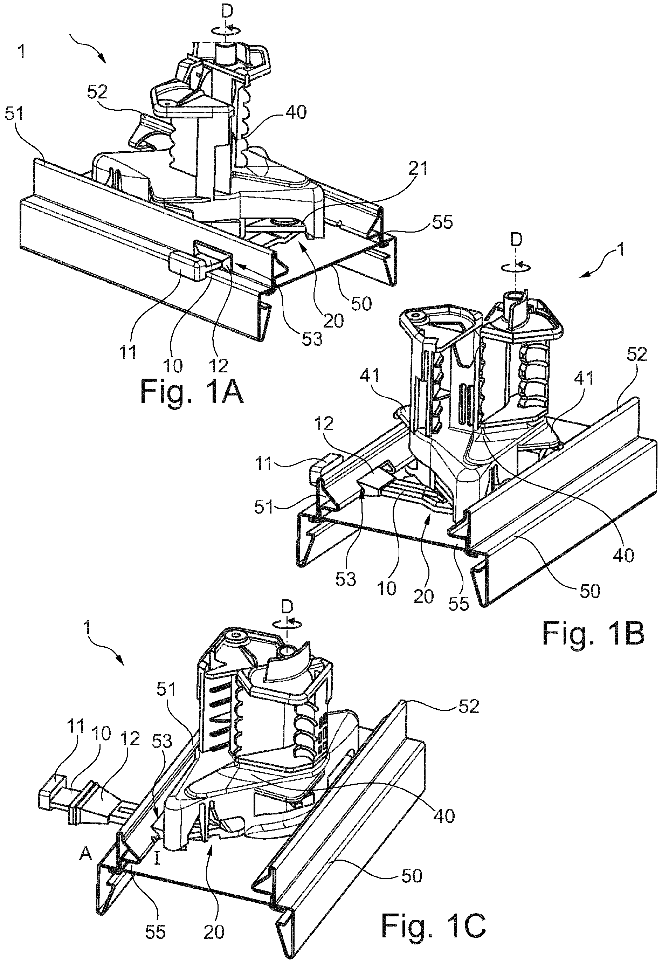

Die in Figur 1A gezeigte Ausführungsform eines erfindungsgemäßen elektrischen Moduls 1, welches zum Anschluss an eine (in den Figuren nicht näher dargestellte) Tragschiene vorgesehen ist, weist ein Kontaktierungselement 40 und ein Trägerelement 50 auf, wobei das Kontaktierungselements 40 dazu ausgebildet ist, das elektrische Modul 1 sowohl elektrisch als auch eine mechanisch mit der Tragschiene zu koppeln, wobei das Kontaktierungselement 40 in das Tragschienenprofil einführbar ist und Anschlusskontakte aufweist. Die Tragschiene weist hierbei ein Tragschienenprofil mit zwei Seitenwänden sowie mindestens eine Stromschiene auf, welche an einer der beiden Innenseiten der Seitenwände des Tragschienenprofils angeordnet ist und elektrisch kontaktierbare Leitungen aufweist. Die Anschlusskontakte des Kontaktierungselements 40 sowie die komplette Tragschiene sind nicht in den Figuren dargestellt. Die Anschlusskontakte sind dazu vorgesehen, in einem in das Tragschienenprofil eingesetzten Zustand des Kontaktierungselements 40 in Anlage gegen Leitungen der Stromschiene zu gelangen. Weiterhin ist das Kontaktierungselement 40 gegenüber dem Trägerelement 50 des elektrischen Moduls 1 zwischen einer Offenposition, in welcher ein Einführen und Entnehmen des Kontaktierungselements 40 aus dem Tragschienenprofil ermöglicht ist, und einer Kontaktierungsposition, in welcher die Anschlusskontakte Leitungen der Stromschiene kontaktieren, um eine Drehachse *D* drehbar gelagert ist.

Das Kontaktierungselement 40 ist zudem mit dem Trägerelement 50 gekoppelt. Das Trägerelement 50 ist bevorzugt länglich ausgebildet, und weist zwei parallel zueinander verlaufende Seitenwände 51, 52 auf, wobei das Kontaktierungselement 40 zwischen den beiden parallel zueinander verlaufenden Seitenwände 51, 52 angeordnet ist. Eine der beiden parallel zueinander verlaufende Seitenwände 51, 52 weist eine Ausnehmung 53 auf, welche es ermöglicht, an der entsprechenden Seite einen Betätigungsarm 10 von einer Innenseite *I* des elektrischen Moduls 1 zu einer Außenseite *A* des elektrischen Moduls 1 durchzuführen, sodass der Betätigungsarm 10 von außen für einen Benutzer zugänglich ist und bedient werden kann. Das Kontaktierungselement 40 ist mit dem Betätigungsarm 10 gekoppelt, welcher dazu ausgebildet ist bei Betätigung das Kontaktierungselement 40 von der Offenposition in die Kontaktierungsposition zu bewegen. Ebenso ist der Betätigungsarm 10 dazu ausgebildet das Kontaktierungselement 40 von der Offenposition in die Kontaktierungsposition zu bewegen. Durch die Ausnehmung 53 kann ein Benutzer den Betätigungsarm 10 bequem und intuitiv von der Außenseite *A* her bedienen, wobei auf der Innenseite *I,* also im Innenraum des elektrischen Moduls 1 das Kontaktierungselement 40 bewegt wird, da der Betätigungsarm 10 durch die Ausnehmung 53 geführt ist.

Das Kontaktierungselement 40 ist bevorzugt neben der elektrischen Kopplung mit der Tragschiene auch dazu ausgebildet eine mechanische Kopplung des elektrischen Moduls 1 mit der Tragschiene einzugehen, sodass eine stabile und einfache Montage des elektrischen Moduls 1 ermöglicht ist. Hierbei weist das Kontaktierungselement 40 bevorzugt Eingreifelemente 41 auf, welche in der Kontaktierungsposition in entsprechende Ausbildungen der Tragschiene eingreifen, wobei in der Offenposition das elektrische Modul 1 mitsamt des Kontaktierungselements 40 in einfacher sicherer Weise in die Tragschiene eingeführt werden kann.

In der in Figur 1A dargestellten Ausführungsform weist eine erste Seitenwand 51 die Ausnehmung 53 auf, wobei bevorzugt die zweite Seitenwand 52 keine Ausnehmung aufweist.

In die Ausnehmung 53 ist eine Dichtung 12 eingeführt, welche die Ausnehmung 53 von außen her abdichtet. Die Dichtung 12 ist hierbei bevorzugt mit dem Betätigungsarm 10 gekoppelt, wobei insbesondere vorgesehen sein kann, dass der Betätigungsarm 10 starr mit der Dichtung 12 verbunden ist, wobei der Raum zwischen Dichtung 12 und Betätigungsarm 10 besonders gut abgedichtet ist. In der dargestellten Kontaktierungsposition ist die Dichtung 12 in die Ausnehmung 53 eingeführt, wobei in einer bevorzugten Ausführung die Dichtung 12 in der Offenposition nicht in die Ausnehmung 53 eingeführt ist. Dies führt zu einer besonders dichten Abdichtung.

Der Betätigungsarm 10 weist weiterhin bevorzugt einen Griff 11 auf, wobei der Griff 11 die Bedingung des Betätigungsarms 10 erleichtert und zudem frontal auf den Betätigungsarm 10 auftreffendes Spritzwasser abschirmt, was zu einer verringerten Belastung der Dichtung 12 führt.

In der dargestellten besonders bevorzugten Ausführung ist der Betätigungsarm 10 mit einem Gelenk 20 gekoppelt, wobei die Bedienung des Betätigungsarms 10 über das Gelenk 20 an das Kontaktierungselement 40 weitergegeben wird. Durch das Gelenk 20 kann die Bauweise des elektrischen Moduls 1 komprimierter gestaltet sein, wobei insbesondere die Fläche des Trägerelements 50 effizienter genutzt wird. Das Gelenk 20 ist hierbei bevorzugt mit einem Drehelement 30 (nicht in Figur 1A gezeigt) über einen Gelenkarm 21 gekoppelt, wodurch die Drehbewegung des Verstellvorgangs des Kontaktierungselements 40 von Kontaktierungsposition zu Offenposition (und vice versa) effizienter gestaltet ist.

In einer anderen Ausführungsform kann weiterhin auch vorgesehen sein, dass der Betätigungsarm 10 in anderer Weise mit dem Drehelement 30, respektive mit dem Kontaktierungselement 40 gekoppelt ist. Insbesondere kann die Kopplung über ein Getriebe, respektive mittels Zahnräder, implementiert sein.

Weiterhin kann vorgesehen sein, dass das Trägerelement 50 jeweils an den beiden parallel zueinander verlaufende Seitenwänden 51, 52 eine Nut 55 aufweist, wobei diese Nut 55, respektive Einbuchtung, jeweils dazu ausgebildet sein kann, mit dem Kontaktierungselement 40 und/oder mit dem Drehelement 30 zu interagieren, wobei insbesondere die Kopplung des Kontaktierungselements 40 mit dem Trägerelement 50 verstärkt ist.

Die Figur 1B zeigt die in der Figur 1A gezeigte Ausführungsform eines erfindungsgemäßen elektrischen Moduls 1 aus einer weiteren Seitenansicht. Die Dichtung 12 wird nun klarer ersichtlich in der Kontaktierungsposition gezeigt, wobei gezeigt ist, dass die Dichtung 12 nicht nur an der Außenseite *A* der ersten Seitenwand 52 anliegt, sondern auch auf der Innenseite *I* der ersten Seitenwand 51 und im Inneren des elektrischen Moduls 1 ausgebildet ist, sodass eine umfassende Dichtung der Ausnehmung 53 vorliegt.

Weiterhin ist ersichtlich, dass in der gezeigten Ausführungsform in der Kontaktierungsposition die Eingreifelemente 41 über den beiden parallel zueinander verlaufende Seitenwänden 51, 52 hervorstehen, sodass im in die Tragschiene eingeführten Zustand eine effektive und stabile Halterung des elektrischen Moduls 1 ermöglicht ist.

Der Betätigungsarm 10 ist in der Kontaktierungsposition weit in das Innere des elektrischen Moduls 1 versenkt bzw. eingeführt. Somit ist das Gelenk 20 in Richtung der zweiten Seitenwand 52 gedrückt, sodass das Drehelement 30 bzw. das Kontaktierungselement 40 in die Kontaktierungsposition gedreht ist.

Die Figur 1C zeigt die in den Figuren 1A und 1B gezeigte Ausführungsform eines erfindungsgemäßen elektrischen Moduls 1 wiederum aus einer anderen Seitenansicht, wobei das elektrische Modul 1 nun in der Offenposition dargestellt ist.

Klar ersichtlich ist, dass in der Offenposition die Dichtung 12 nicht in die Ausnehmung 53 eingeführt ist, wobei die Dichtung 12 mit dem Betätigungsarm 10 gekoppelt ist. Der Betätigungsarm 10 ist nun nur noch minimal im Inneren des elektrischen Moduls 1 vorhanden, sodass das Gelenk 20 maximal in Richtung der ersten Seitenwand 51 gezogen ist und das Drehelement 30 bzw. das Kontaktierungselement 40 in die Offenposition gedreht ist.

Wie in der Figur 1C angedeutet ist, weist die Dichtung 12 in einer bevorzugten Ausführungsform zumindest ein Dichtungselement auf, wobei das Dichtungselement bevorzugt eine Dichtungslamelle ist. Hierdurch lässt sich die Ausnehmung 53 besonders gut abdichten.

In der gezeigten Offenposition werden zudem die beiden parallel zueinander verlaufende Seitenwänden 51, 52 nicht durch die Eingreifelemente 41 überlappt, sodass das elektrische Modul 1 in einfacher Weise in eine Tragschiene eingeführt und montiert bzw. aus der Tragschiene entnommen werden kann.

Der Betätigungsarm 10 ermöglicht es also durch simples Betätigen auf der Außenseite *A* des elektrischen Moduls 1 die Position des Kontaktierungselements 40 auf der Innenseite *I* des elektrischen Moduls zu verändern, wobei gleichzeitig durch einen Verstellvorgang hin zur Kontaktierungsposition das elektrische Modul 1 an der Ausnehmung 53 durch die Dichtung 12 abgedichtet wird. In einer bevorzugten Ausführungsform wird der Betätigungsarm 10 in einer geradlinigen Bewegung betätigt, derart dass der Betätigungsarm 10 je nach Verstellvorgang in das elektrische Modul 1 hineingeführt wird, oder herausgezogen wird.

Hierbei ist der Betätigungsarm 10 bevorzugt derart beschaffen, dass das simple geradlinige Betätigen des Betätigungsarms 10 eine Drehbewegung des Drehelements 30 bzw. des mit dem Drehelement 30 gekoppelten Kontaktierungselement 40 bewirkt. Hierdurch wird einem Benutzer eine besonders intuitive und sichere Bedienmethode zur Verfügung gestellt.

Die in den Figuren gezeigten Ausführungen des erfindungsgemäßen elektrischen Moduls 1 zeigen stets einen Ausschnitt des bevorzugt länglichen Trägerelements 50, wobei weiterhin auch vorgesehen sein kann, dass ein Trägerelement 50 mehrere Kontaktierungselemente 40, bzw. Drehelemente 30 und somit auch mehrere Betätigungsarme 10 aufweist, wobei dies insbesondere für besonders lange Trägerelemente vorgesehen sein kann. Insbesondere ist die Länge des Trägerelements 50 (und somit die Länge des elektrischen Moduls 1) bevorzugt stets kleiner gleich der Länge der Tragschiene, wobei auch mehrere elektrische Module 1 an einer Tragschiene angeordnet sein können.

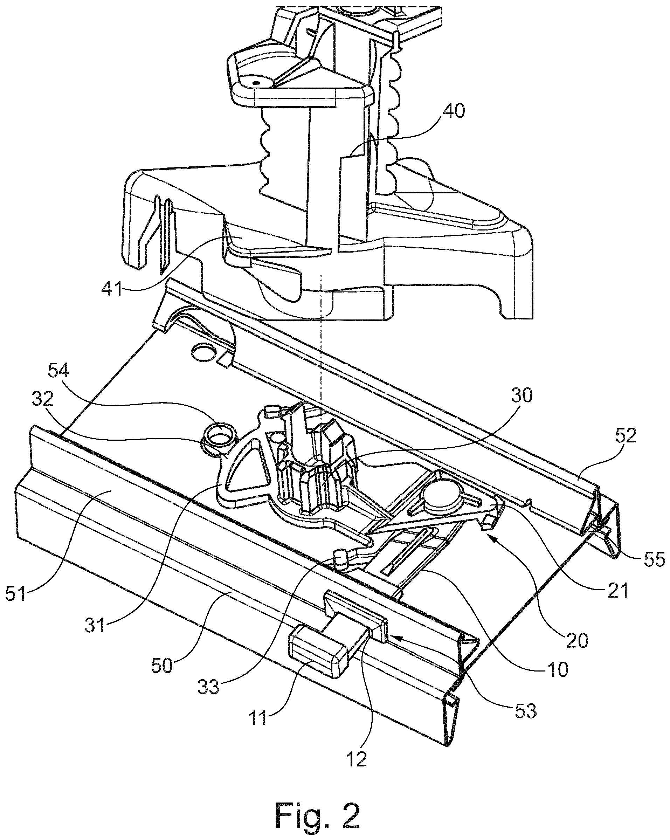

Die Figur 2 zeigt eine Explosionsdarstellung einer Ausführungsform eines erfindungsgemäßen elektrischen Moduls 1 in Kontaktierungsposition. Hierbei wird das Kontaktierungselement 40 vom Drehelement 30 abgehoben dargestellt, was die gestrichelte Linie verdeutlicht. Insbesondere stellt die gestrichelte Linie auch die Drehachse *D* dar.

In dieser Darstellung ist die Anordnung auf der Innenseite *I* des elektrischen Moduls verdeutlicht dargestellt, wobei ersichtlich ist, dass das Kontaktierungselement 40 auf dem Drehelement 30 aufgesteckt gekoppelt ist. Allerdings ist es auch denkbar, dass anstatt der Rastverbindung zwischen dem Kontaktierungselement 40 und dem Drehelement 30 auch eine andersartige Kopplung besteht. Zudem sind in der Figur 2 die Komponenten, welche unter dem Kontaktierungselement 40 angeordnet sind, dargestellt.

Auf dem Trägerelement 50 ist hierbei das Drehelement 30 angeordnet, wobei mit dem Drehelement 30 der Gelenkarm 21 gekoppelt ist, wobei der Gelenkarm 21 insbesondere integral durch das Drehelement 30 gebildet ist, welcher mit dem Betätigungsarm 10 über das Gelenk 20 gekoppelt ist.

Weiterhin ist das Drehelement 30 an einen Vorsprungbereich 31 gekoppelt, welcher insbesondere integral mit dem Drehelement 30 ausgebildet ist. Der Vorsprungbereich 31 weist hierbei ein Rastelement 32 auf, welches insbesondere als Rastnase gebildet ist. In der gezeigten Ausführungsform ist das Rastelement 32 mit Bezug auf die Drehachse *D* dem Betätigungsarm 10 gegenüberliegend angeordnet ist. Weiterhin ist das Rastelement 32 in der gezeigten Ausführung derart angeordnet, dass eine geradlinige Bewegung des Betätigungsarms 10 in einer kreisbahnförmigen Bewegung des Rastelements 32 resultiert.

Das Restelement 32 ist derart ausgebildet, dass es in der Kontaktierungsposition durch die Kopplung des Drehelements 30 mit dem Betätigungsarm 10 die Dichtung 12 in die Ausnehmung 53 drückt. In der gezeigten Ausführungsform weist hierbei das Trägerelement 50 ein Widerstandselement 54 auf, wobei das Rastelement 32 mit dem Widerstandselement 54 interagiert. Das Widerstandselement 54 ist wiederum dazu ausgebildet, das Kontaktierungselement 40 bzw. das Drehelement 30 in der Kontaktierungsposition zu arretieren, wobei das Widerstandselement 54 insbesondere integral mit dem Trägerelement 50 ausgebildet sein kann oder ein Federelement oder eine Gumminoppe sein kann.

In der gezeigten Ausführung ist das Widerstandselement 54 derart angeordnet, dass beim Verstellvorgang von Offenposition zu Kontaktierungsposition, also bei der Fixierbewegung das Rastelement 32 das Widerstandselement 54 passieren muss, um die Kontaktierungsposition zu erreichen. Hierbei hemmt das Widerstandselement 54 zunächst die Bewegung, sodass ein unbeabsichtigtes Verstellen und Fixieren ausgehend von der Offenposition verhindert wird. Die Fixierbewegung wird hierbei bis zum Erreichen eines Scheitelpunkts, bzw. eines Totpunkts des Widerstandselements 54 gehemmt, wobei ab Erreichen dieses Scheitelpunkts das Widerstandselement 54 die Fixierbewegung unterstützt, insbesondere derart, dass das Widerstandselement 54 das Rastelement 32 von sich wegdrückt, wobei auch die Drehbewegung des Drehelements 30 unterstützt wird. Hierdurch wird bewerkstelligt, dass der über das Gelenk 20 mit dem Drehelement 30 verbundene Betätigungsarm 10 in das elektrische Modul 1 hereingezogen wird und somit auch die Dichtung 12 in die Ausnehmung 53 gezogen bzw. gedrückt wird, wodurch eine besonders effektive und beständige Dichtung der Ausnehmung 53 realisiert ist.

Beim Verstellvorgang von Kontaktierungsposition zu Offenposition, also bei der Lösebewegung, wirkt das Widerstandselement 54 zunächst hemmend, sodass ein unbeabsichtigtes Verstellen des Kontaktierungselements 40 und somit ein Lösen der Kopplung des elektrischen Moduls 1 mit der Tragschiene verhindert wird. Nach Überschreitung des Scheitelpunkts wiederum begünstigt das Zusammenspiel aus Rastelement 32 und Widerstandselement 54 den Verstellvorgang, sodass ein gesichertes Lösen und Herausnehmen des elektrischen Moduls 1 bewerkstelligt ist.

Neben der Ausführung des Widerstandselements 54 als integraler Bestandteil des Trägerelements 50, beispielsweise erzeugt durch Verformen des Trägerelements 50, ist es ebenso denkbar, dass das Widerstandselement 54 ein Federelement oder eine Gumminoppe ist.

Zudem weist das Drehelement 30 in der in Figur 2 dargestellten Ausführung zwei Vorsprünge 33 auf, welche in Bezug zur Drehachse *D* gegenüberliegend zueinander angeordnet sind. Die Vorsprünge 33 sind hierbei in der Offenposition (nicht in Figur 2 dargestellt) in der Nut 55 angeordnet, wobei die Vorsprünge 33 dazu ausgebildet sind das Drehelement 30 in der Offenposition zu halten, sodass ein unbeabsichtigtes Verstellen des Drehelements 30 verhindert wird. Weiterhin sind die Vorsprünge 33 dazu ausgebildet ab einem entsprechenden Kraftaufwand bei der Fixierbewegung sich geringfügig zu verbiegen, sodass die Fixierbewegung ermöglicht ist, wobei die jeweiligen Vorsprünge 33 mit der jeweiligen Seitenwand der beiden parallel zueinander verlaufende Seitenwänden 51, 52 zu interagieren, sodass die Fixierbewegung durch Reibung gehemmt wird.

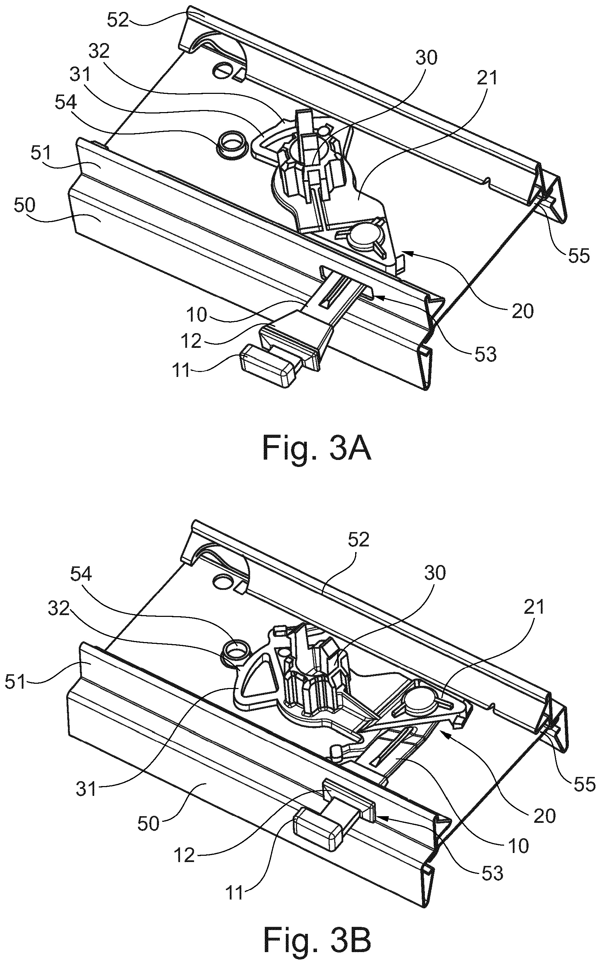

Die Figur 3, bestehend aus Figur 3A und 3B, zeigt eine Seitenansicht einer beispielhaften Ausführungsform eines erfindungsgemäßen elektrischen Moduls 1 ohne Darstellung des Kontaktierungselements 40 in Offenposition (Figur 3A) und in Kontaktierungsposition (Figur 3B). Hierbei wird ersichtlich wie die Komponenten während eines Verstellvorgangs verstellt werden und miteinander interagieren, wobei insbesondere dargestellt ist, dass ein Betätigen des Betätigungsarms 10 mittels Drücken den Betätigungsarm 10 in das elektrische Modul 1 versenkt, sodass die Dichtung 12 in die Ausnehmung 53 gedrückt wird und diese dicht verschließt. Weiterhin wird das Gelenk 20 in Richtung der zweiten Seitenwand 52 gedrückt, sodass eine Drehbewegung um die Drehachse *D* des Drehelements 30 resultiert, wobei hierdurch das Rastelement 32 eine kreisförmige Bewegung vollzeiht und mit dem Widerstandselement 54 interagiert, wobei bei Erreichen der Kontaktierungsposition das Drehelement 30 (und somit auch das nicht gezeigte Kontaktierungselement 40) arretiert ist.

Zudem zeigen die Bilder 3A und 3B die in der Offenposition nicht ersichtlichen Vorsprünge 33, welche jeweils innerhalb der Nut 55 der jeweiligen Seitenwand 51, 52 des elektrischen Moduls angeordnet sind.

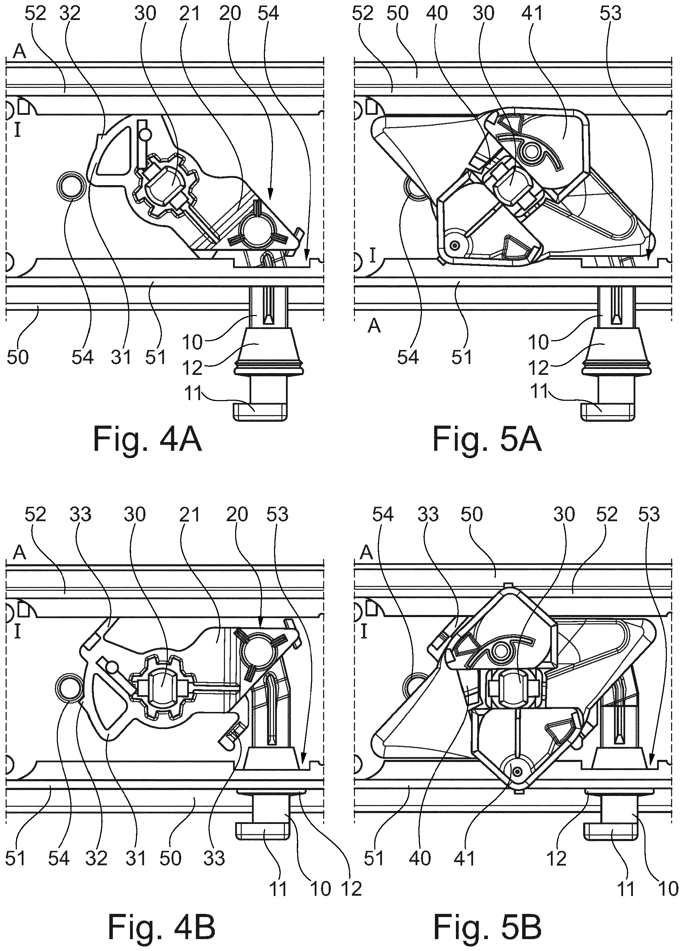

Die Figuren 4A, 4B, 5A und 5B zeigen jeweils eine Draufsicht auf eine beispielhafte Ausführungsform eines erfindungsgemäßen elektrischen Moduls 1 mit (Figuren 5A und 5B) bzw. ohne (Figuren 4A und 4B) Darstellung des Kontaktierungselements 40 sowohl in Offenposition (Figuren 4A und 5A) sowie in Kontaktierungsposition (Figuren 4B und 5B).

In den dargestellten Ausführungen wird das Zusammenspiel der Komponenten im Verstellvorgang weiter verdeutlicht. Hierbei ist auch das Abdichten der Ausnehmung 53 durch die Dichtung 12 durch Betätigung des Betätigungsarms 10 dargestellt, wobei ersichtlich ist, dass durch Interaktion des Widerstandselements 54 mit dem Rastelement 32, welches insbesondere mit dem Vorsprungbereich 31 gekoppelt ist, die Position des Drehelements 30, respektive des Kontaktierungselements 40 feststellt und über das Gelenk 20 die Position des Betätigungsarms 10 und somit die Position der Dichtung 12 arretiert ist, derart, dass das elektrische Modul 1 zur Außenseite *A* hin abgedichtet ist, und insbesondere ein Eintreten von Nässe, Feuchtigkeit und Staub zur Innenseite *I* hin verhindert wird. In einer bevorzugten Ausführung wird hierbei erreicht, dass diese Abdichtung den Anforderungen der Schutzklasse IP54 genügt, besonders bevorzugt der Schutzklasse IP64.

Zudem ist die Bewegung der Vorsprünge 33 und der Eingreifelemente 41 durch die Figuren 4A bis 5B dargestellt.

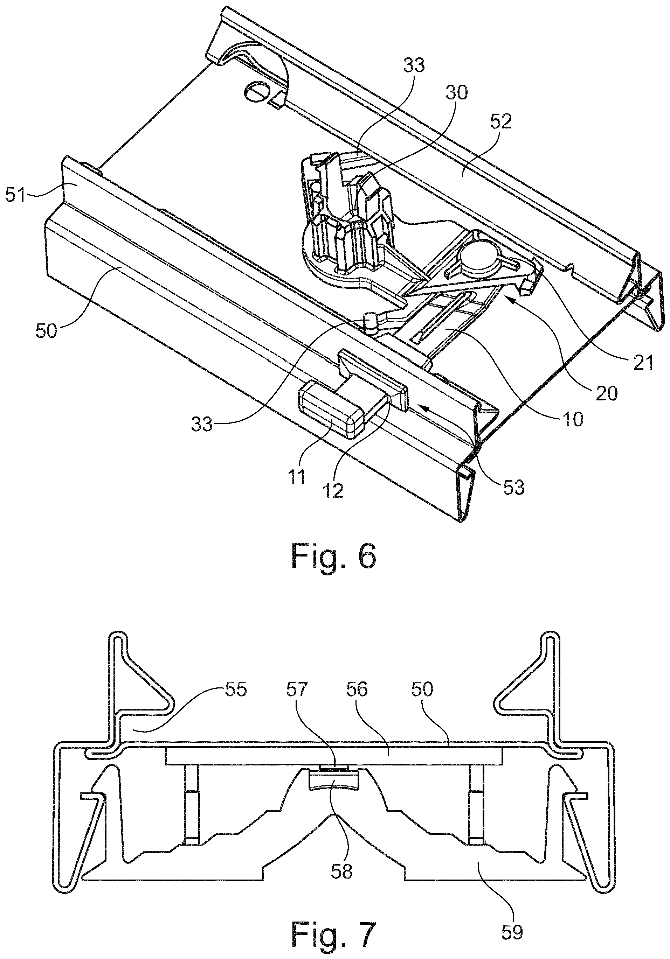

In der Figur 6 ist eine weitere beispielhaften Ausführungsform eines erfindungsgemäßen elektrischen Moduls 1 gezeigt. Hierbei weist das Trägerelement 50 kein Widerstandselement 54 auf. Das derartig ausgebildete elektrische Modul 1 ist allerdings ebenfalls durch die Dichtung 12 abgedichtet. Die Vorsprünge 33 verhindern ein unbeabsichtigtes Verstellen des Drehelements 30 aus der Offenposition. Die eingestellte Kontaktierungsposition wird durch den eingeführten Betätigungsarm 10 und das Gelenk 20 fixiert, wobei zudem die Dichtung 12 durch Reibungskraft an der Ausnehmung 53 einer Lösungsbewegung des Kontaktierungselements 40 respektive des Drehelements 30 entgegenwirkt.

Das elektrische Modul 1 kann hierbei verschiedene und unterschiedliche Funktionen bedienen. In der Figur 7 ist eine beispielhafte Ausführung des elektrischen Moduls 1 als Leuchte gezeigt, wobei nicht alle Komponenten des elektrischen Moduls 1 gezeigt sind. Insbesondere kann vorgesehen sein, dass das elektrische Modul 1 eine Leuchte zur Raumbeleuchtung ist, wobei bevorzugt das Trägerelement 50 zumindest ein Leuchtmittel 55, besonders bevorzugt eine LED, aufweist, und wobei insbesondere die Leuchte eine lichtdurchlässige Abdeckung 56 und/oder ein optisches Element 57 aufweist. Hierbei kann insbesondere vorgesehen sein, dass die einzelnen Komponenten ohne Verwendung eines eigenständigen Fixierelements, wie beispielsweise einer Schraube oder einer Verklebung, mit dem Trägerelement 50 verbunden werden, wobei die einzelnen Komponenten durch Rastverbindungen mit dem Trägerelement 50 gekoppelt sind. Insbesondere kann vorgesehen sein, dass die lichtdurchlässige Abdeckung 59 eine Fassung für ein optisches Element 57 aufweist, wobei zudem die lichtdurchlässige Abdeckung 59 eine Trägerplatte 56, welche insbesondere eine Platine sein kann, gegen das Trägerelement 50 drückend mit dem Trägerelement 50 gekoppelt ist. Diese Kopplung ist hierbei bevorzugt durch eine einrastende Verbindung des optischen Elements 59 mit nach unten geführten Seitenwänden des länglichen Trägerelements 50 gebildet.

Weiterhin kann das elektrische Modul 1 auch als Sensoreinheit oder als Kameraeinheit ausgebildet sein. In der Ausführungsform des elektrischen Moduls 1 als Sensoreinheit, umfasst die Sensoreinheit bevorzugt zumindest einen Helligkeitssensoren und/oder einen Bewegungssensor und/oder einen Temperatursensoren und/oder andere Sensoren. In der Ausführungsform des elektrischen Moduls 1 als Kameraeinheit, umfasst die Kameraeinheit bevorzugt eine Kamera zur Raumüberwachung und/oder eine herkömmliche Kamera und/oder eine Nachtbildkamera und/oder eine Infrarotkamera und/oder Wärmebildkamera.

Somit kann das elektrische Modul 1 anwendungsspezifisch ausgestattet und eingesetzt werden, wobei das elektrische Modul 1 besonders flexibel an die Bedürfnisse des Benutzers anpassbar ist und vielseitig verwendet werden kann. Insbesondere kann das derartige elektrische Modul 1 auch unter widrigen Bedingungen wie beispielsweise Staub, Feuchtigkeit und Nässe eingesetzt werden, da die Dichtung 12 die Ausnehmung 53 nach außen hin abdichtet.

Weiterhin kann ein Tragschienensystem vorgesehen sein, welches zumindest eine Tragschiene, sowie zumindest ein elektrisches Modul 1 umfasst. Hierbei ist insbesondere denkbar, dass verschiedene Ausführungsformen des elektrischen Moduls 1 mit einer Tragschiene gekoppelt werden, sodass das Tragschienensystem an benutzerspezifische Anforderungen flexibel und einfach anpassbar ist. Weiterhin wird durch eine derartige Ausgestaltung eines Tragschienensystems mit der Verwendung zumindest eines elektrischen Moduls 1 die Montage des Systems erleichtert und zudem sicherer gemacht, da das elektrische Modul 1 mit der Dichtung 12 den Betrieb des Systems auch unter suboptimalen Bedingungen ermöglicht, wobei zudem je nach Ausführungsform ein einfaches, flexibles und sicheres Montageverfahren und eine einfache Bedienung durch das Gelenk 20 und/oder das Rastelement 32 und/oder das Widerstandselement 54 und/oder die Vorsprünge 33 und/oder die Eingreifelemente 41 erzielt ist.

Letztendlich wird also durch die erfindungsgemäße Lösung eine sehr einfach zu handhabende, äußerst komfortable und sichere Möglichkeit geschaffen, das Kontaktierungselement eines elektrischen Moduls 1 eines Tragschienensystems zu betätigen. Somit ist ein elektrisches Modul 1 beschrieben, welches sich durch seine einfache und sichere Bedienbarkeit auszeichnet, wobei die zur einfachen und sicheren Bedienung benötigte Ausnehmung 53, durch welche der Betätigungsarm 10 geführt ist, durch die Dichtung 12 im montierten Zustand, also in der Kontaktierungsposition, abgedichtet ist.

Wie bereits erwähnt kann das erfindungsgemäße Konzept nicht nur bei Leuchten zum Einsatz kommen, sondern grundsätzlich bei allen Verbrauchern oder Einheiten, die an entsprechende Tragschienen anzuschließen sind.

## Patentansprüche

1. Elektrisches Modul (1) zum Anschließen an eine Tragschiene, welche ein Tragschienenprofil mit zwei Seitenwänden sowie mindestens eine Stromschiene aufweist, welche an einer der beiden Innenseiten der Seitenwände des Tragschienenprofils angeordnet ist und elektrisch kontaktierbare Leitungen aufweist, wobei das elektrische Modul (1) ein Kontaktierungselement (40) aufweist, welches in das Tragschienenprofil einführbar ist und Anschlusskontakte aufweist, die dazu vorgesehen sind, in einem in das Tragschienenprofil eingesetzten Zustand des Kontaktierungselements (40) in Anlage gegen Leitungen der Stromschiene zu gelangen,
und wobei das Kontaktierungselement (40) gegenüber einem Trägerelement (50) des elektrischen Moduls (1) zwischen einer Offenposition, in welcher ein Einführen und Entnehmen des Kontaktierungselements (40) aus dem Tragschienenprofil ermöglicht ist, und einer Kontaktierungsposition, in welcher die Anschlusskontakte Leitungen der Stromschiene kontaktieren, um eine Drehachse (*D*) drehbar gelagert ist,
wobei das Trägerelement (50) zwei parallel zueinander verlaufenden Seitenwände (51, 52) aufweist, wobei das Kontaktierungselement (40) zwischen den beiden parallel zueinander verlaufenden Seitenwänden (51, 52) angeordnet ist, und
wobei das Kontaktierungselement (40) mit einem Betätigungsarm (10) gekoppelt ist, welcher dazu ausgebildet ist bei Betätigung das Kontaktierungselement (40) von der Offenposition in die Kontaktierungsposition zu bewegen und vice versa, und
wobei der Betätigungsarm (10) durch eine Ausnehmung (53) in einer der beiden parallel zueinander verlaufenden Seitenwände (51, 52) geführt ist, derart dass der Betätigungsarm (10) von einer Außenseite (A) des elektrischen Moduls (1) betätigt werden kann,
**dadurch gekennzeichnet,**
**dass** der Betätigungsarm (10) eine Dichtung (12) aufweist, welche dazu ausgebildet ist, die Ausnehmung (53) in der Kontaktierungsposition des Kontaktierungselements (40) abzudichten.

2. Elektrisches Modul nach Anspruch 1,
**dadurch gekennzeichnet,**
**dass** die Dichtung (12) in der Offenposition nicht die Ausnehmung (53) abdichtet.

3. Elektrisches Modul nach einem der Ansprüche 1 oder 2,
**dadurch gekennzeichnet,**
**dass** die Dichtung (12) zumindest ein Dichtungselement aufweist, wobei das Dichtungselement bevorzugt eine Dichtungslamelle ist.

4. Elektrisches Modul nach einem der vorherigen Ansprüche,
**dadurch gekennzeichnet,**
**dass** das Kontaktierungselement (40) mit einem Drehelement (30) gekoppelt ist, wobei das Drehelement (30) bevorzugt über ein Gelenk (20) mit dem Betätigungsarm (10) verbunden ist, derart, dass der Betätigungsarm (10) in einer geradlinigen Bewegung bewegbar ist.

5. Elektrisches Modul nach Anspruch 4,
**dadurch gekennzeichnet,**
**dass** das Gelenk (20) derart ausgebildet ist, dass eine geradlinige Bewegung des Betätigungsarms (10) in einer Drehbewegung des Drehelements (30), und des damit gekoppelten Kontaktierungselements (40), resultiert.

6. Elektrisches Modul nach Anspruch 4 oder 5,
**dadurch gekennzeichnet,**
**dass** das Drehelement (30) ein Rastelement (32) aufweist, wobei besonders bevorzugt das Rastelement (32) an einem Vorsprungbereich (31) des Drehelements (30) angeordnet ist.

7. Elektrisches Modul nach einem der Ansprüche Anspruch 4 bis 6,
**dadurch gekennzeichnet,**
**dass** eine geradlinige Bewegung des Betätigungsarms (10) in einer kreisbahnförmigen Bewegung des Rastelements (32) resultiert.

8. Elektrisches Modul nach einem der Ansprüche 6 oder 7,
**dadurch gekennzeichnet,**
**dass** das Rastelement (32) derart ausgebildet ist, dass es in der Kontaktierungsposition durch die Kopplung des Drehelements (30) mit dem Betätigungsarm (10) die Dichtung (12) in die Ausnehmung (53) drückt.

9. Elektrisches Modul nach einem der Ansprüche 6 bis 8,
**dadurch gekennzeichnet,**
**dass** das Rastelement (32) mit Bezug auf die Drehachse (D) dem Betätigungsarm (10) gegenüberliegend angeordnet ist.

10. Elektrisches Modul nach einem der vorherigen Ansprüche,
**dadurch gekennzeichnet,**
**dass** das Trägerelement (50) ein Widerstandselement (54) aufweist, welches dazu ausgebildet ist, das Kontaktierungselement (40) in der Kontaktierungsposition zu arretieren, wobei das Widerstandselement (54) insbesondere integral mit dem Trägerelement (50) ausgebildet sein kann oder ein Federelement oder eine Gumminoppe sein kann.

11. Elektrisches Modul nach Anspruch 10,
**dadurch gekennzeichnet,**
**dass** das Rastelement (32) dazu ausgebildet ist, mit dem Widerstandselement (54) zu interagieren,
wobei das Rastelement (32) vorzugsweise eine Fixierbewegung des Kontaktierungselements (40) von der Offenposition in die Kontaktierungsposition bis zum Erreichen eines Scheitelpunkts des Widerstandselement (54) die Fixierbewegung hemmt, und wobei ab Erreichen des Scheitelpunkts des Widerstandselements (54) das Rastelement (32) die Fixierbewegung unterstützt,
wobei bevorzugt das Rastelement (32) eine Lösebewegung des Kontaktierungselements (40) von der Kontaktierungsposition in die Offenposition bis zum Erreichen eines Scheitelpunkts des Widerstandselements (54) die Lösebewegung hemmt, und wobei ab Erreichen des Scheitelpunkts des Widerstandselements (54) das Rastelement (32) die Lösebewegung unterstützt.

12. Elektrisches Modul nach einem der vorherigen Ansprüche,
**dadurch gekennzeichnet,**
**dass** in der Kontaktierungsposition die Abdichtung der Ausnehmung (53) die Schutzklasse IP54, bevorzugt die Schutzklasse IP64 erfüllt.

13. Elektrisches Modul nach einem der vorherigen Ansprüche,
**dadurch gekennzeichnet,**
**dass** das elektrische Modul (1) eine Leuchte ist, wobei bevorzugt das Trägerelement (50) zumindest ein Leuchtmittel (55), besonders bevorzugt eine LED, aufweist, und wobei insbesondere die Leuchte eine lichtdurchlässige Abdeckung (56) und/oder ein optisches Element (57) aufweist.

14. Elektrisches Modul nach einem der Ansprüche 1 bis 12,
**dadurch gekennzeichnet,**
**dass** das elektrische Modul (1) eine Sensoreinheit ist, wobei die Sensoreinheit insbesondere Helligkeitssensoren oder andere Sensoren umfasst, oder
**dass** das elektrische Modul (1) eine Kameraeinheit ist, wobei die Kameraeinheit insbesondere eine Kamera zur Raumüberwachung oder eine Wärmebildkamera aufweist.

15. Tragschienensystem umfassend:
- zumindest eine Tragschiene, welche ein Tragschienenprofil mit zwei Seitenwänden sowie mindestens eine Stromschiene aufweist, welche an einer der beiden Innenseiten der Seitenwände des Tragschienenprofils angeordnet ist und elektrisch kontaktierbare Leitungen aufweist; sowie
- zumindest ein elektrisches Modul (1) gemäß einem der vorherigen Ansprüche, wobei das zumindest eine elektrische Modul (1) mit der zumindest einen Tragschiene gekoppelt ist.

## Claims

1. An electric module (1) for connecting to a mounting rail, which comprises a mounting rail profile having two lateral walls as well as at least one busbar, which is arranged on one of the two inner faces of the lateral walls of the mounting rail profile and comprises electrically contactable lines, wherein the electric module (1) comprises a contacting element (40), which is insertable into the mounting rail profile and comprises connection contacts, which are provided in order to be brought into abutment against lines of the busbar in a state of the contacting element (40) after it has been inserted into the mounting rail profile,
and wherein the contacting element (40) is mounted rotatably about a rotational axis (D) opposite a supporting element (50) of the electrical module (1) between an open position, which enables the contacting element (40) to be inserted and removed from the mounting rail profile, and a contacting position, in which the connection contacts contact lines of the busbar,
wherein the supporting element (50) comprises two lateral walls (51, 52) extending parallel to one another, wherein the contacting element (40) is arranged between the two lateral walls (51, 52) extending parallel to one another, and
wherein the contacting element (40) is coupled to an actuating arm (10), which is configured such that, when actuated, it moves the contacting element (40) from the open position into the contacting position and vice versa, and wherein the actuating arm (10) is guided through a recess (53) in one of the two lateral walls (51, 52) extending parallel to one another such that the actuating arm (10) can be actuated from an outer side (A) of the electrical module (1),
**characterized in that**
the actuating arm (10) comprises a seal (12), which is configured so as to seal the recess (53) in the contacting position of the contacting element (40).

2. The electrical module according to claim 1,
**characterized in that**
in the open position, the seal (12) does not seal the recess (53).

3. The electrical module according to any one of claims 1 or 2,
**characterized in that**
the seal (12) comprises at least one sealing element, wherein the sealing element is preferably a sealing blade.

4. The electrical module according to any of the preceding claims,
**characterized in that**
the contacting element (40) is coupled to a rotational element (30), wherein the rotational element (30) is preferably connected to the actuating arm (10) via a hinge (20), such that the actuating arm (10) is movable in a straight-line motion.

5. The electrical module according to claim 4,
**characterized in that**
the hinge (20) is configured such that a straight-line motion of the actuating arm (10) results in a rotational movement of the rotational element (30) and the contacting element (40) coupled thereto.

6. The electrical module according to claim 4 or 5,
**characterized in that**
the rotational element (30) comprises a catching element (32), wherein the catching element (32) is particularly preferably arranged at a protrusion region (31) of the rotational element (30) .

7. The electrical module according to any one of claims 4 to 6,
**characterized in that**
a straight-line motion of the actuating arm (10) results in a spherical motion of the catching element (32).

8. The electrical module according to any one of claims 6 or 7,
**characterized in that**
the catching element (32) is configured such that it presses the seal (12) into the recess (53) in the contacting position by coupling the rotational element (30) to the actuating arm (10).

9. The electrical module according to any one of claims 6 to 8,
**characterized in that**
the catching element (32) is arranged opposite the actuating arm (10) with respect to the rotational axis *(D).*

10. The electrical module according to any of the preceding claims,
**characterized in that**
the supporting element (50) comprises a resistance element (54), which is configured so as to lock the contacting element (40) in the contacting position, wherein the resistance element (54) can in particular be integrally formed with the supporting element (50) or can be a spring element or a rubber stud.

11. The electrical module according to claim 10,
**characterized in that**
the catching element (32) is configured so as to interact with the resistance element (54),
wherein the catching element (32) preferably inhibits a fixing motion of the contacting element (40) from the open position into the contacting position until reaching an apex of the resistance element (54), and wherein, after reaching the apex of the resistance element (54), the catching element (32) supports the fixing motion,
wherein the catching element (32) preferably inhibits a releasing motion of the contacting element (40) from the contacting position into the open position until reaching an apex of the resistance element (54), and wherein, after reaching the apex of the resistance element (54), the catching element (32) supports the releasing motion.

12. The electrical module according to any of the preceding claims,
**characterized in that**
in the contacting position, the sealing of the recess (53) fulfills the protection class IP54, preferably the protection class IP64.

13. The electrical module according to any of the preceding claims,
**characterized in that**
the electrical module (1) is a luminaire, wherein the supporting element (50) preferably comprises at least one lamp (55), particularly preferably an LED, and wherein the luminaire comprises in particular a translucent cover (56) and/or an optical element (57).

14. The electrical module according to any one of claims 1 to 12,
**characterized in that**
the electrical module (1) is a sensor unit, wherein the sensor unit comprises in particular brightness sensors or other sensors, or
the electrical module (1) is a camera unit, wherein the camera unit comprises in particular a camera for spatial monitoring or a thermal camera.

15. A mounting rail system comprising:
- at least one mounting rail, which comprises a mounting rail profile having two lateral walls as well as at least one busbar, which is arranged at one of the two inner faces of the lateral walls of the mounting rail profile and comprises electrically contactable lines; and
- at least one electrical module (1) according to any one of the preceding claims, wherein the at least one electrical module (1) is coupled to the at least one mounting rail.

## Revendications

1. Module électrique (1) destiné à être raccordé à un rail de support présentant un profilé de rail de support doté de deux parois latérales et au moins un rail conducteur qui est agencé sur l'un des deux bords intérieurs des parois latérales du profilé de rail de support et qui présente des conducteurs susceptibles d'être mis en contact électrique, ledit module électrique (1) présentant un élément de mise en contact (40) susceptible d'être inséré dans le profilé de rail de support et présentant des contacts de connexion prévus pour venir en butée contre des conducteurs du rail conducteur lorsque l'élément de mise en contact (40) est installé dans le profilé de rail de support,
et dans lequel l'élément de mise en contact (40) est monté rotatif sur un axe de rotation (D) par rapport à un élément de support (50) du module électrique (1) entre une position ouverte permettant l'insertion et le retrait de l'élément de mise en contact (40) par rapport au profilé de rail de support, et une position de contact dans laquelle les contacts de connexion viennent en contact avec des conducteurs du rail conducteur,
ledit élément de support (50) présentant deux parois latérales (51, 52) parallèles, ledit élément de mise en contact (40) étant agencé entre les deux parois latérales (51, 52) parallèles, et ledit élément de mise en contact (40) étant couplé à un bras d'actionnement (10) qui est conçu, lorsqu'il est actionné, pour faire passer l'élément de mise en contact (40) de la position ouverte à la position de contact et vice versa, et ledit bras d'actionnement (10) étant guidé par un évidement (53) réalisé dans l'une des deux parois latérales (51, 52) parallèles de telle façon que ledit bras d'actionnement (10) peut être actionné depuis l'extérieur *(A)* du module électrique (1),
**caractérisé en ce que**
le bras d'actionnement (10) présente un joint (12) conçu pour assurer l'étanchéité de l'évidement (53) dans la position de contact de l'élément de mise en contact (40).

2. Module électrique selon la revendication 1,
**caractérisé en ce que**
dans la position ouverte, le joint (12) n'étanchéifie pas l'évidement (53).

3. Module électrique selon l'une des revendications 1 et 2,
**caractérisé en ce que**
le joint (12) présente au moins un élément d'étanchéité, ledit élément d'étanchéité consistant de préférence en une lamelle d'étanchéité.

4. Module électrique selon l'une des revendications précédentes,
**caractérisé en ce que**
l'élément de mise en contact (40) est couplé à un élément de rotation (30), ledit élément de rotation (30) étant raccordé au bras d'actionnement (10) de préférence par une articulation (20) de telle façon que le bras d'actionnement (10) peut être déplacé en ligne droite.

5. Module électrique selon la revendication 4,
**caractérisé en ce que**
l'articulation (20) est conçue de telle façon qu'un déplacement en ligne droite du bras d'actionnement (10) se traduit par une rotation de l'élément de rotation (30) et de l'élément de mise en contact (40) couplé à ce dernier.

6. Module électrique selon la revendication 4 ou 5,
**caractérisé en ce que**
l'élément de rotation (30) présente un élément d'encliquetage (32), ledit élément d'encliquetage (32) étant tout préférablement agencé au niveau d'une zone en saillie (31) de l'élément de rotation (30).

7. Module électrique selon l'une des revendications 4 à 6,
**caractérisé en ce que**
un mouvement en ligne droite du bras d'actionnement (10) se traduit par un déplacement en arc de cercle de l'élément d'encliquetage (32) .

8. Module électrique selon l'une des revendications 6 et 7,
**caractérisé en ce que**
l'élément d'encliquetage (32) est conçu de façon à presser le joint (12) dans l'évidement (53), dans la position de contact, du fait du couplage de l'élément de rotation (30) au bras d'actionnement (10) .

9. Module électrique selon l'une des revendications 6 à 8,
**caractérisé en ce que**
l'élément d'encliquetage (32) est agencé à l'opposé du bras d'actionnement (10) par rapport à l'axe de rotation (D).

10. Module électrique selon l'une des revendications précédentes,
**caractérisé en ce que**
l'élément de support (50) présente un élément de résistance (54) conçu pour bloquer l'élément de mise en contact (40) dans la position de contact, ledit élément de résistance (54) pouvant notamment être conçu d'un seul tenant avec l'élément de support (50) ou pouvant consister en un élément de ressort ou un bossage en caoutchouc.

11. Module électrique selon la revendication 10,
**caractérisé en ce que**
l'élément d'encliquetage (32) est conçu pour interagir avec l'élément de résistance (54) ;
ledit élément d'encliquetage (32) empêchant de préférence un mouvement de fixation de l'élément de mise en contact (40), de la position ouverte à la position de contact, jusqu'à ce que soit atteint le sommet de l'élément de résistance (54) et, une fois le sommet de l'élément de résistance (54) atteint, l'élément d'encliquetage (32) favorisant ledit mouvement de fixation,
ledit élément d'encliquetage (32) empêchant de préférence un mouvement de détachement de l'élément de mise en contact (40), de la position de contact à la position ouverte, jusqu'à ce que soit atteint le sommet de l'élément de résistance (54) et, une fois le sommet de l'élément de résistance (54) atteint, l'élément d'encliquetage (32) favorisant ledit mouvement de détachement.

12. Module électrique selon l'une des revendications précédentes,
**caractérisé en ce que**
en position de contact, l'étanchéité de l'évidement (53) correspond à l'indice de protection IP54 et de préférence à l'indice de protection IP64.

13. Module électrique selon l'une des revendications précédentes,
**caractérisé en ce que**
le module électrique (1) est un luminaire, ledit élément de support (50) présentant de préférence au moins un élément lumineux (55), particulièrement une LED, et ledit luminaire présentant notamment un organe de couverture transparent (56) et/ou un élément optique (57) .

14. Module électrique selon l'une des revendications 1 à 12,
**caractérisé en ce que**
le module électrique (1) est une unité à capteurs comprenant notamment des capteurs de luminosité ou d'autres capteurs, ou
le module électrique (1) est une unité à caméra présentant notamment une caméra de surveillance d'intérieur ou une caméra thermique.

15. Système de rails de support comprenant :
- au moins un rail de support présentant un profilé de rail de support doté de deux parois latérales et au moins un rail conducteur qui est agencé sur l'un des deux bords intérieurs des parois latérales du profilé de rail de support et qui présente des conducteurs susceptibles d'être mis en contact électrique, et
- au moins un module électrique (1) selon l'une des revendications précédentes, l'au moins un module électrique (1) étant couplé à l'au moins un rail de support.
